# EUROPEAN PATENT SPECIFICATION

(11) **EP 0 813 369 B1**
(45) Date of publication and mention of the grant of the patent: **05.12.2001**
(21) Application number: 96903942.9
(22) Date of filing: 08.03.1996
(51) Int. Cl.: A23G 9/04

(54) **METHOD AND A REFRIGERATING APPARATUS FOR MAKING A SLUSH ICE**
VERFAHREN UND GEFRIERAPPARAT ZUR HERSTELLUNG VON ZERSTOSSENEM EIS
PROCEDE ET APPAREIL DE REFRIGERATION POUR LA FABRICATION DE GLACE CONCASSEE

(30) Priority: 08.03.1995 DK 950090; 30.08.1995 DK 950335
(43) Date of publication of application: 29.12.1997
(73) Proprietor: DANSK TEKNOLOGISK INSTITUT, 8000 Aarhus C (DK)
(72) Inventor: KAUFFELD, Michael, DK-8450 Hammel (DK); ROSENSTEDT, Kaj, DK-8230 Aabyhoej (DK); MOELLER, Lars, Bay, DK-8355 Solbjerg (DK); ELEFSEN, Frank, DK-8210 Aarhus V (DK)
(74) Representative: Nielsen, Leif
(86) International application number: DK9600097
(87) International publication number: WO9627298

(56) References cited:
- DE-A- 2 455 492
- US-A- 3 826 829
- US-A- 4 171 069
- US-A- 5 072 596

## Description

The present invention relates to a refrigerating apparatus for producing a slush ice and comprising a first refrigerating circuit for a liquid, which contains a freezing point depressing agent and is used for formation of the slush ice, and a second refrigerating circuit for a refrigerating medium, said two refrigerating circuits being in a heat exchange relation for refrigerating the liquid. The invention further relates to the use of such a refrigerating apparatus for the production of slush ice either for use in processing industries or in the shape of a beverage, preferably a beverage containing alcohol.

The invention further relates to a refrigerating apparatus for producing a slush ice and comprising a first refrigerating circuit for a liquid to be used for the formation of the slush ice and a second refrigerating circuit for a refrigerating medium, said two refrigerating circuits being in a heat exchange relation for refrigeration of the liquid and ice formation in the first circuit, said first refrigerating circuit comprising a pump, which constantly moves the liquid through the first refrigerating circuit.

A large number of refrigerating apparatuses for the production of slush ice are known. All of these apparatuses are disadvantageous, however, as they contain mechanical elements in the form of knives, scrapers and similar devices for removing formed ice. This gives rise to wearing down and requires frequent adjustment in order to function reasonably effectively.

A number of apparatuses are also known in which no mechanical elements are used. In such plants, e.g. known from DK 2190/78, DE-OS 2,828,410 or DE-PS 2,455,492, only a strongly refrigerated liquid may be produced. Slush ice cannot be produced. Such plants are disadvantageous since too strong refrigeration of the liquid may cause the formation of ice and consequently blocking with subsequent need to stop the plant and exercise heating in order to remove the ice formations. Therefore, it is a common assumption in the art that ice formation in the liquid has to be avoided.

A large number of refrigerating apparatuses are known that are used for refrigerating beverages. E.g. they may be apparatuses for refrigerating draught beer, soft drinks, drinking water and the like. A common characteristic of these apparatuses is that they refrigerate the beverage to a temperature above its freezing point. It is a general assumption in the art that refrigeration below the freezing point is impossible due to the risk of icing and consequently blocking of the apparatus.

US Patent No. 5,072,596 discloses a system for producing slush ice according to a method as discussed in the introduction. According to said disclosure the ice is formed in a film of water which flows on a chilled surface then droping into a storage tank.

US Patent No. 4,171,069 discloses a beverage dispenser. According to this publication it is possible to produce a chilled beverage. However, the beverage manufactured would not contain any ice.

US Patent No. 3,826,829 discloses a slush beverage. This publication discloses a specific composition of a carbonated liquid being suitable for producing the slush beverage. However, the publication does not disclose a specific method or apparatus for producing the slush beverage.

US Patent No. 4,401,449 discloses a plant of the above-mentioned type which may be used for exercising the method discussed in the introduction. According to said publication ice crystals are formed on the inner side of tubes in the first refrigerating circuit by refrigerating the liquid to its freezing point. These ice crystals are disengaged due to a high flow speed, and the ice crystal concentration is increased in an ice accumulation tank where the liquid/ice mixture is subjected to a pressure reduction. This process is disadvantageous since it requires very precise control of several process parameters to obtain a slush ice product without the risk of stuck ice formations in the conduit of the first refrigerating circuit.

It is the object of the present invention to disclose an apparatus making it possible to form slush ice without the use of mechanical elements for ice removal and at the same time departing from the general assumption that icing will make refrigeration of the liquid below its freezing point impossible.

This is obtained according to the present invention by the characteristic that a freezing point depressing agent and particles that are suited to have ice particles frozen onto them are added to the liquid, and that the liquid in the first refrigerating circuit is refrigerated in order to form ice crystals on the particles. The refrigerating apparatus according to the invention is characterised in that the liquid in the first refrigerating circuit contains a freezing point depressing agent as well as particles that are suited to have ice crystals frozen onto them, and that the first refrigerating circuit comprises a conduit having a particularly smooth inner side.

As a freezing point depressing agent and particles suited to have ice crystals frozen onto them are added or have been added to the liquid, the need for precise control will be very limited. Thus, there will be no risk of icing on the inner side of conduits in the first refrigerating circuit, which would mean a risk of blocking. During refrigeration of the liquid below its freezing point so that ice formation occurs, it will occur on the articles. Since the liquid is transformed into ice on the particles, an increased concentration of the freezing point depressing agent will occur in the remaining liquid. This will depress the freezing point of the remaining liquid. Owing to this, the risk of ice formation that might settle on the pipes is avoided and, similarly, the remaining liquid may be considered to act as a kind of lubricant for the ice crystals. In this manner a slush ice having a very viscous form results. Even if minor inexactitudes occur in temperature control, this will not immediately give rise to blocking of the refrigerating circuit conduits nor to a total absence of ice formation. Such a minor temperature oscillation will only lead to a larger or smaller concentration of ice crystals in the icy product formed, the slush ice.

Since the apparatus is designed to establish sufficient refrigeration of the liquid, it is possible to form a product containing ice, a so-called slush ice. In practical tests it has turned out surprisingly that no icing occurs in the apparatus. It is assumed that this is due to a combination of the particularly smooth inner side of the conduit in the first refrigerating circuit and the constant movement of the liquid in the first refrigerating circuit when the apparatus is in operation.

Thus, it has proven possible to produce a refrigerating apparatus capable of producing a slush ice substantially according to the method described above. Very surprisingly, however, it has proven possible, when using particularly smooth inner sides in the conduit, that ice crystals may be formed in the liquid itself rather than on the inner side of the pipes. However, a particularly safe and effective use of the apparatus according to the invention will lead to the above-mentioned addition of particles to the liquid in the first refrigerating circuit.

Thus, it is significant that the liquid contains particles, e.g. in the shape of sugar crystals, and that the ice crystals may be formed on these particles rather than on the inner side of the conduit in the first refrigerating circuit. Therefore, it is preferred to use the apparatus with a liquid containing such particles.

Practical tests have shown that particularly good results may be obtained when at least the inner side of the circuit is in plastic. Thus, conduits may be used which are entirely in plastic or metal conduits, e.g. in aluminium, having an inner plastic coating, e.g. Teflon.

The apparatus may be technically simple and very compact if the conduit in the first refrigerating circuit is spiral-shaped and is placed in a cylinder-shaped reservoir for refrigerating medium in the second refrigerating circuit. If the reservoir is a container having the shape of a cylinder shell, the amount of refrigerating medium may be reduced, and at the same time the refrigerating medium will be forced closely past the conduit so that effective heat exchange is obtained between the two refrigerating circuits.

Thus, with the present invention it is made possible to produce a slush ice according to a principle that has hitherto been considered inapplicable.

It is further made possible to form a beverage which has not been seen before. The beverage will have very small ice crystals, which will be evenly distributed throughout the beverage. Thus, it is not just an ice formation that will remain in a liquid surface.

This beverage will preferably be a beverage containing alcohol such as white wine but it may also be a soft drink, e.g. lemonade, soda or the like. Soft drinks will preferably be refrigerated to a temperature of approximately -1°C - -5°C. For beverages containing alcohol the temperature depends on the alcohol percentage. For wine having an alcohol content of 8 - 12%, a refrigeration to a temperature of approximately -4°C--8°C will be made. Accordingly, sugar, salts or alcohols may be used as the freezing point depressing agent.

The invention will now be explained in further detail with reference to the accompanying drawing, in which
- Figure 1: shows a schematic view of a first embodiment of an apparatus according to the invention, and
- Figure 2: shows a schematic view of a second embodiment of an apparatus according to the invention.

The same or identical parts will be designated by the same reference numerals in the two figures.

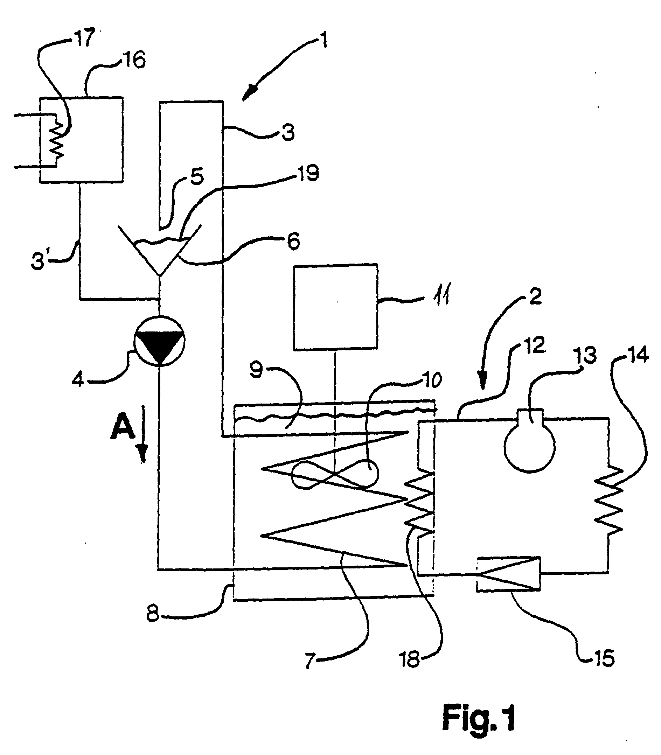

Figure 1 shows an apparatus with a first refrigerating circuit 1 for a liquid to be transformed into a beverage in the shape of a slush ice product and a second refrigerating circuit 2 for a refrigerating medium to be used for the production of the beverage. The refrigerating circuit 1 for the beverage 19 comprises a conduit 3 having a smooth inner side and a pump 4, which constantly circulates the beverage in the direction of the arrow A when the apparatus is in use. The conduit 3 is in plastic but may alternatively be in metal with a plastic coating on the inner side, or simply having a polished inner side.

The beverage may be taken out at a pipe stub 5 leading into a return vessel 6, which contains the beverage 19. The conduit 3 is connected with the bottom of the return vessel 6 and has a section 7 that is spiral-shaped. Immediately after the return vessel 6 the conduit 3 is connected with a branch conduit 3', which is connected with a supply source in the form of a refrigerated storage tank 16 for refilling the first refrigerating circuit 1 on consumption of the beverage. The storage tank 16 is refrigerated by means of a refrigerator unit 17, which may optionally be an evaporator in a separate refrigerating circuit or a supplementary evaporator in the refrigerating circuit 2. Refrigeration is just to a temperature above the freezing point.

The spiral-shaped section 7 is submerged in a container 8, which is filled with a refrigerating medium 9 and which constitutes a part of the second refrigerating circuit 2.

The second refrigerating circuit 2 further comprises a conduit 12 connected with a heat exchanger in the shape of an evaporator 18, which is positioned in the container 8 with a compressor 13, a condenser 14 and an expansion member in the shape of an expansion valve 15. Positioned in the container 8 is a stirrer 10, which is driven by a motor 11 and which ensures a movement of the refrigerating medium 9 and consequently effective heat exchange between the heat exchanger 18, the refrigerating medium 9 and the beverage in the spiral-shaped section 7.

The refrigerating apparatus is designed with a capacity sufficient to refrigerate the beverage and create an ice formation in the first refrigerating circuit 1. In the second refrigerating circuit 2 of the apparatus, the refrigerating medium 9 in the container may be any type of brine, e.g. a salt/water mixture, glycol/water mixture, alcohol/water mixture or mixtures that are non-aqueous.

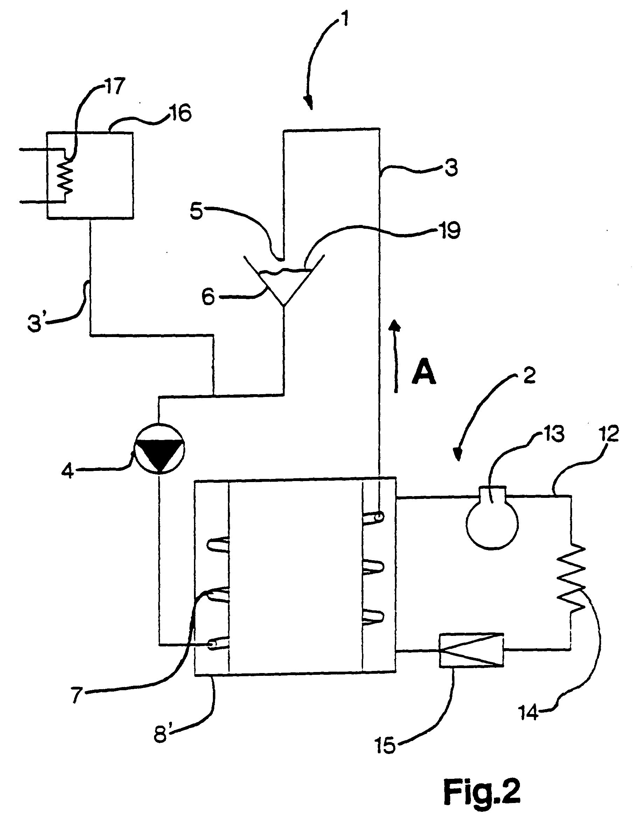

A second embodiment of an apparatus according to the invention is seen in Fig. 2. In the apparatus shown in Fig. 2, the container 8 is replaced by a container 8' having the shape of a casing or cylinder shell. In this embodiment it becomes possible to simplify the second refrigerating circuit. Thus, there is no need for a refrigerating medium 9 for heat exchange between the second refrigerating circuit and the spiral-shaped section 7 of the first refrigerating circuit. Thus, the second refrigeration circuit is a closed circuit 8',12 with internal circulation. The container 8' having the shape of a cylinder shell constitutes or replaces in principle the evaporator 18 shown in Fig. 1. The use of a stirrer 10 and a motor 11 is also made superfluous. In the container 8 having the shape of a cylinder shell sufficient heat exchange is obtained directly between the refrigerating medium in the second refrigerating circuit and the spiral-shaped section 7.

The apparatus will be used according to a method explained above in the description. It is possible to produce a beverage of a type not previously known, which has the consistency of a very light slush ice in which the ice crystals are evenly distributed and constitute substantially the whole beverage.

The apparatus shown in the figures may also be used as a part of or a complete refrigerating apparatus in industrial plants for ventilation and refrigeration/freezing. Such plants may for example be used in process industries, particularly in the food sector. When the refrigerating apparatus according to the invention is used in such plants, it is possible to circulate the formed slush ice product through the plant. This makes it possible to reduce pipe dimensions and/or to increase the refrigerating effect of the plant due to the larger energy binding in the liquid slush ice product compared to ordinary strongly refrigerated liquids.

In stead of the vessel 6 the apparatus according to the invention may contain a branching connected to the refrigerating/freezing plant or the ventilation unit. In such industrial plants the evaporator in the first refrigerating circuit will preferably be a tubular heat exchanger but it will also be possible to use other known types as long as it is ensured that at least the part of the conduit in the first refrigerating circuit in which the slush ice is formed has a smooth inner side.

## Claims

1. A method for producing a slush ice, wherein a liquid is circulated in a first refrigerating circuit, which is in heat exchange with a second refrigerating circuit refrigerating the liquid in the first refrigerating circuit for formation of the slush ice, **characterised in that** a freezing point depressing agent and particles that are suited to have ice particles frozen onto them are added to the liquid, and that the liquid in the first refrigerating circuit is refrigerated in order to form ice crystals on the particles.

2. A method according to claim 1, **characterised in that** the freezing point depressing agent comprises sugar, salts or alcohols.

3. A method according to claim 1 or 2, **characterised in that** the refrigerating circuits are used in ventilation units and refrigerating/freezing plants, preferably for use in processing industry.

4. A method according to any one of claims 1-3, **characterised in that** the liquid is a beverage containing sugar crystals on which the ice crystals may be formed.

5. A method according to claim 4, **characterised in that** the beverage is alcoholic, preferably a white wine.

6. A refrigerating apparatus for producing a slush ice and comprising a first refrigerating circuit for a liquid to be used for the formation of the slush ice and a second refrigerating circuit for a refrigerating medium, said two refrigerating circuits being in a heat exchange relation for refrigeration of the liquid and ice formation in the first circuit, said first refrigerating circuit comprises a pump, which constantly moves the liquid through the first refrigerating circuit, **characterised in that** the liquid in the first refrigerating circuit contains a freezing point depressing agent as well as par ticles that are suited to have ice crystals frozen onto them, and that the first refrigerating circuit comprises a conduit having a particularly smooth inner side.

7. A refrigerating apparatus according to claim 6, **characterised in that** at least the inner side of the conduit of the first refrigerating circuit is in plastic.

8. A refrigerating apparatus according to claim 6 or 7, **characterised in that** the conduit of the first refrigerating circuit is an aluminium conduit.

9. A refrigerating apparatus according to any one of claims 6-8, **characterised in that** the conduit of the first refrigerating circuit comprises a spiral-shaped section, which is submerged in a reservoir for the refrigerating medium in the second refrigerating circuit and that the reservoir is a container having the shape of a cylinder shell and enveloping the conduit of the first circuit, that said container constitutes a part of the second circuit, or that the reservoir is a vessel in which the spiral is submerged, and that a stirrer is provided in the vessel for inducing movement into the refrigerating medium.

10. A refrigerating apparatus according to any one of the preceding claims, **characterised in that** the first refrigerating circuit is an open circuit connected to a supply source of the liquid, and that the second refrigerating circuit is a closed circuit with internal circulation.

## Patentansprüche

1. Ein Verfahren zur Herstellung von zerstossenem Eis, worin eine Flüssigkeit in einem ersten Kühlkreislauf zirkuliert wird, der mit einem zweiten Kältemittelkreislauf Wärme austauscht, der die Flüssigkeit im ersten Kältemittelkreislauf für die Bildung von zerstossenem Eis kühlt, **dadurch gekennzeichnet, dass** ein gefrierpunktsenkendes Mittel und Teilchen, die dazu angepasst sind, dass Eisteilchen auf ihnen eingefroren werden, zugeführt werden, und dass die Flüssigkeit im ersten Kältemittelkreislauf gekühlt wird, um Eiskristalle auf den Teilchen zu bilden.

2. Ein Verfahren nach Anspruch 1, **dadurch gekennzeichnet, dass** das gefrierpunktsenkendes Mittel Sucker, Salze oder Alkohole umfasst.

3. Ein Verfahren nach Anspruch 1 oder 2, **dadurch gekennzeichnet, dass** die Kältemittelkreisläufe in Lüftungseinheiten und Kühl-/Gefrieranlagen, vorzugsweise für die Verwendung in der Verarbeitungsindustrie verwendet werden.

4. Ein Verfahren nach jedem der Ansprüche 1-3, **dadurch gekennzeichnet, dass** die Flüssigkeit ein Getränk ist, das Suckerkristallen enthält, worauf die Eiskristalle gebildet werden können.

5. Ein Verfahren nach Anspruch 4, **dadurch gekennzeichnet, dass** das Getränk alkoholisch ist, vorzugsweise ein Weißwein.

6. Ein Gefrierapparat zur Herstellung vom zerstossenen Eis, und der einen ersten Kältemittelkreislauf für eine Flüssigkeit umfasst, die zum Ansatz des zerstossenen Eises verwendet wird, und einen zweiten Kältemittelkreislauf für einen Kälteträger umfasst, wobei die beiden erwähnten Kältemittelkreisläufe sich in einer Wärmeaustauschrelation für das Gefrieren einer Flüssigkeit und für den Eisansatz befinden, indem der erwähnte erste Kältemittelkreislauf eine Pumpe umfasst, die konstant die Flüssigkeit durch den ersten Kältemittelkreislauf bewegt, **dadurch gekennzeichnet, dass** die Flüssigkeit im ersten Kältemittelkreislauf ein gefrierpunktsenkendes Mittel enthält so wie Teilchen, die dazu angepasst sind, dass Eiskristalle auf ihnen eingefroren werden, und dass der erste Kältemittelkreislauf eine Leitung umfasst, die eine besonders glatte Innenseite hat.

7. Ein Gefrierapparat nach Anspruch 6, **dadurch gekennzeichnet, dass** mindestens die Innenseite der Leitung des ersten Kältemittelkreislaufes aus Plastik ist.

8. Ein Gefrierapparat nach Anspruch 6 oder 7, **dadurch gekennzeichnet, dass** die Leitung des ersten Kältemittelkreislaufes eine Aluminiumleitung ist.

9. Ein Gefrierapparat nach jedem der Ansprüche 6-8, **dadurch gekennzeichnet, dass** die Leitung des ersten Kältemittelkreislaufes eine spiralförmige Sektion umfasst, die in einem Reservoir für das Kältemittel im zweiten Kältemittelkreislauf untergetaucht ist, und dass das Reservoir ein Behälter ist, der die Form eines Zylinderschalens hat und die Leitung des ersten Kreislaufes umschließt, dass der erwähnte Behälter ein Teil des zweiten Kreislaufes ausmacht, oder dass das Reservoir ein Behälter ist, worin eine Spirale untergetaucht ist, und dass ein Umrührgerät im Behälter vorgesehen ist, um Bewegung im Kälteträger zu bewirken.

10. Ein Gefrierapparat nach jedem der vorigen Ansprüche, dadurch **gekennzeich net**, dass der erste Kältemittelkreislauf ein offener Kreislauf ist, der zu einer Versorgungsquelle der Flüssigkeit verbunden ist, und dass der zweiten Kältemittelkreislauf ein geschlossener Kreislauf mit interner Zirkulation ist.

## Revendications

1. Procédé pour la fabrication de glace concassée, où un liquide étant circulé dans un premier circuit de réfrigération, lequel est en échange de chaleur avec un deuxième circuit de réfrigération réfrigérant le liquide dans un premier circuit de réfrigération pour la fabrication de la glace concassée, **caractérisé en ce qu'**un agent abaissant le point de congélation et des particules qui sont disposées à avoir des particules de glace congélées sur elles, sont ajoutés au liquide et que le liquide dans le premier circuit de réfrigération est réfrigéré pour former des cristaux de glace sur les particules.

2. Procédé selon la revendication 1, **caractérisé en ce que** l'agent abaissant le point de congélation comprend du sucre, des sels ou des alcools.

3. Procédé selon la revendication 1 ou 2, **caractérisé en ce que** les circuits de réfrigération sont utilisés dans les installations de ventilation et des installations de réfrigération/congélation, de préférence pour l'utilisation dans l'industrie de transformation.

4. Procédé selon l'une quelconque des revendications 1 à 3, **caractérisé en ce que** le liquide est une boisson contenant des cristaux de sucre sur lesquels les cristaux de glace peuvent être formés.

5. Procédé selon la revendication 4, **caractérisé en ce que** la boisson est alcoolique, de préférence un vin blanc.

6. Appareil de réfrigération pour la fabrication de glace concassée et comprenant un premier circuit de réfrigération pour un liquide à être utilisé pour la formation de glace concassée et un deuxième circuit de réfrigération pour un réfrigérant, lesdits deux circuits de réfrigération étant en échange de chaleur pour la réfrigération du liquide et la formation de glace dans le premier circuit, ledit premier circuit de réfrigération comprenant une pompe qui constamment dirige le liquide à travers le premier circuit de réfrigération, **caractérisé en ce que** le liquide dans le premier circuit de réfrigération contient un agent abaissant le point de congélation ainsi que des particules qui sont disposées à avoir des cristaux de glace congélés sur elles, et que le premier circuit de réfrigération comprend une conduite possédant une paroi intérieure particulièrement lisse.

7. Appareil de réfrigération selon la revendication 6, **caractérisé en ce qu'**au moins la paroi intérieure de la conduite du premier circuit de réfrigération est en plastique.

8. Appareil de réfrigération selon la revendication 6 ou 7, **caractérisé en ce que** la conduite du premier circuit de réfrigération est une conduite en aluminium.

9. Appareil de réfrigération selon l'une quelconque des revendications 6 à 8, **caractérisé en ce que** la conduite du premier circuit de réfrigération comprend une section en forme de spirale qui est plongée dans un réservoir du réfrigérant dans le deuxième circuit de réfrigération et que le réservoir est un récipient présentant la forme d'un cylindre et enveloppant la conduite du premier circuit, que ledit récipient constitue une partie du deuxième circuit, ou que le réservoir est une cuve dans laquelle la spirale est plongée et qu'un agitateur est prévu dans la cuve pour créer un mouvement dans le réfrigérant.

10. Appareil de réfrigération selon l'une quelconque des revendications précédentes,
**caractérisé en ce que** le premier circuit de réfrigération est un circuit ouvert lié à une source d'alimentation de liquide et que le deuxième circuit de réfrigération est un circuit fermé avec circulation interne.
